# EUROPEAN PATENT SPECIFICATION

(11) **EP 2 132 907 B1**
(45) Date of publication and mention of the grant of the patent: **14.05.2014**
(21) Application number: 07748337.8
(22) Date of filing: 07.03.2007
(51) Int. Cl.: H04L 12/46, H04W 76/02, H04W 40/12

(54) **ESTABLISHING PARALLEL TUNNELS FOR HIGHER BIT RATE**
HERSTELLEN VON PARALLELEN TUNNELN FÜR EINE HÖHERE BIT RATE
ÉTABLISSEMENT DE TUNNELS PARALLÈLES POUR UN DÉBIT BINAIRE SUPÉRIEUR

(43) Date of publication of application: 16.12.2009
(73) Proprietor: Telefonaktiebolaget LM Ericsson (publ), 164 83 Stockholm (SE)
(72) Inventor: SIMONSSON, Arne, S-95433 Gammelstad (SE); WONG, Edas, S-164 46 Kista (SE); NÄSMAN, Anders, S-113 59 Stockholm (SE); ALMGREN, Magnus, S-191 43 Sollentuna (SE); SKILLERMARK, Per, S-112 55 Stockholm (SE)
(74) Representative: Kühn, Friedrich Heinrich
(86) International application number: PCT/SE2007/050128
(87) International publication number: WO 2008/108695

(56) References cited:
- US-A1- 2002 105 922
- US-A1- 2003 224 758
- US-A1- 2005 163 079
- US-A1- 2005 163 079
- US-A1- 2006 215 594
- US-A1- 2006 215 594

## Description

### TECHNICAL FIELD

The present invention relates generally to a method and an arrangement in a fixed wireless terminal and a network controller node, in a radio access network. In particular it relates to an establishment of at least two packet data tunnels for packet transmission, from the fixed wireless terminal in a local area network through a set of cells in the radio access network.

### BACKGROUND OF THE INVENTION

Fixed wireless terminals are used for a wireless communications link as the "last mile / first mile" connection for delivering high speed broadband services e.g. video conferencing or broadband internet to telecommunications customers.

Fixed wireless terminals differ from conventional mobile terminal units operating within cellular networks such as Global System for Mobile Communications (GSM) or Wideband Code Division Multiple Access (WCDMA), in that they can serve several users and terminals simultaneously and improve service coverage. Also, in many cases a fixed wireless terminal will be limited to an almost permanent location with almost no roaming or find-me anywhere facilities.
Fixed wireless terminals or FWT:s are generic terms for radio based telecommunications technologies which devices can be implemented using a number of different wireless and radio technologies such as e.g. GSM, General Packet Radio Services (GPRS), Enhanced Data rates for Global Evolution (EDGE), WCDMA, Code Division Multiple Access 2000 (CDMA2000), High-Speed Packet Access (HSPA), CDMA2000 Evolution Data Optimized (EvDO) and Worldwide Interoperability for Microwave Access (WiMax).

Fixed wireless terminal products for High-Speed Downlink Packet Access (HSDPA) access are currently available. Such terminals can, without being inconvenient, be equipped with multiple antennas or may use external antennas.

One application of fixed wireless terminals is to improve indoor coverage in dense urban areas with high rise buildings. One or more terminals such as e.g. laptops can be served by a single fixed wireless terminal which are connected through a fixed Local Area Network (LAN) or Wireless Local Area Network (WLAN). The fixed wireless terminal is connected to a base station and serves the communication between the base station and the terminals in the LAN or WLAN.

The performance of a fixed wireless terminal is very sensitive to antenna location. "If the antenna of the fixed wireless terminal is placed in a good radio environment towards the base station, the fixed wireless terminal performs much better than the case where the terminals communicates directly with the base station using no fixed wireless terminal. Oppositely, mistakenly placing the fixed wireless terminal antenna in a poor radio environment towards the base station e.g. non line of sight or blocked by people passing-by, causes very large degradation of performance."
Under non-dominant serving cells environment the total throughput may be decreased when using fixed wireless terminal. This is since the fixed wireless terminal communicates with only one base station while terminals without fixed wireless terminal might be simultaneously served by several High Speed Packet Access (HSPA) cells resulting in a total higher capacity and improved service when used simultaneously. US2006215594 discloses a system wherein diversity is provided. US2005163079 discloses a system where double and triple tunnels may be used to connect.

### SUMMARY OF THE INVENTION

It is therefore an object of the present invention to provide a mechanism for an improved network capacity when using a fixed wireless terminal.

According to a first aspect of the present invention, the object is achieved by a method according to claim 1 in a radio access network node for establishing at least two packet data tunnels for packet transmission, from a fixed wireless terminal in a local area network through a set of cells in a radio access network. The set of cells comprises at least two cells. The fixed wireless terminal is a radio access network node comprised in the radio access network. The radio access network comprises a plurality of potential cells to which the packet data tunnels may be established, whereof said set of cells are part of the potential cells. The method comprising the steps of: Selecting the set of cells to use for a packet transmission, based on radio link quality between the fixed wireless terminal and each of the respective potential cells and establishing the at least two packet data tunnels, one individual packet data tunnel from the fixed wireless terminal through each of the respective cells in the selected set of cells.

According to a second aspect of the present invention, the object is achieved by an arrangement according to claim 6 in a fixed wireless terminal. The fixed wireless terminal is comprised in a local area network and is a radio access network node comprised in the radio access network: The radio access network comprises a plurality of potential cells through which at least two packet data tunnels are adapted to be established. The fixed wireless terminal arrangement comprises a selection unit adapted to select a set of cells based on radio link quality between the fixed wireless terminal and each of the respective potential cells: The set of cells comprises at least two cells, which two cells are part of the potential cells. The fixed wireless terminal arrangement further comprises a tunnel establishing unit adapted to establish the at least two packet data tunnels for packet transmission, from the fixed wireless terminal through the selected set of cells to a network controller node, one individual packet data tunnel from the fixed wireless terminal 100 through each of the respective cells in the selected set of cells.

According to a third aspect of the present invention, the object is achieved by an arrangement according to claim 17 in a network controller node. The network controller node is a radio access network node comprised in the radio access network. The radio access network comprises a plurality of potential cells through which at least two packet data tunnels are adapted to be established from a fixed wireless terminal. The fixed wireless terminal is comprised in the radio access network and in a local area network. The network controller node arrangement comprises a receiver adapted to receive radio link quality measurement from one or more base stations serving the respective plurality of potential cells. The network controller node arrangement further comprises a selection unit adapted to select a set of cells based on the received radio link quality between the fixed wireless terminal and each of the respective potential cells. The set of cells comprises at least two cells. The at least two cells are part of the potential cells. The set of cells are adapted to be used to establish the at least two packet data tunnels for packet transmission.

Since a set of cells to use for a packet transmission is selected, based on radio link quality from the fixed wireless terminal and through each of the respective potential cells, and since the at least two packet data tunnels are established, one individual packet data tunnel from the fixed wireless terminal through each of the respective cells in the selected set of cells, packets may be sent using more than one cell, using the at least two tunnels. This implies that the performance and capacity of the fixed wireless terminal are improved. Due to the time variance in load this also entail that the capacity of the network is improved.

An advantage of the present invention is that the service quality and the bitrate are improved.

A further advantage of the present invention is that the use of more cells will also share the load between these cells, improving performance and service quality for other terminals in these cells.

A yet further advantage of the present invention is that, since several cells can be used, an error or failure in a single cell will not block communication and packet data transmissions, resulting in that the grade of service for the fixed wireless terminal will be improved.

### BRIEF DESCRIPTION OF THE DRAWINGS

- Figure 1: is a schematic block diagram illustrating establishment of tunnels in a radio access network.
- Figure 2: is a flow chart illustrating a method according to some embodiments of the present invention.
- Figure 3: is a flow chart illustrating a method according to some embodiments of the present invention.
- Figure 4: is a schematic combined flow chart and signalling scheme illustrating a method according to some embodiments of the present invention.
- Figure 5: is a schematic block diagram illustrating an arrangement in a fixed wireless terminal.
- Figure 6: is a schematic block diagram illustrating an arrangement in a network controller node.

### DETAILED DESCRIPTION OF PREFERRED EMBODIMENT

The invention is defined as a method and an arrangement which may be put into practice in the embodiments described below.

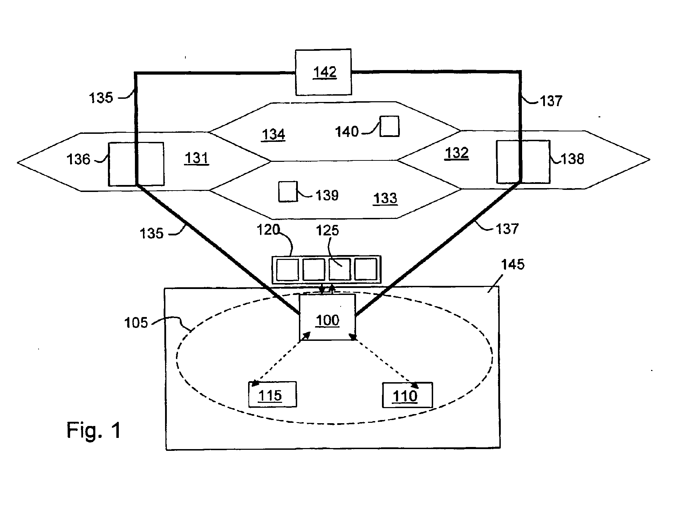

Figure 1 depicts a fixed wireless terminal 100 in a local area network 105 such as .e.g. a Ethernet or Wireless Local Area Network (WLAN). The local area network 105 comprises the fixed wireless terminal 100 and one or more terminals whereof two terminals, a first terminal 110 and a second terminal 115 are shown in Figure 1, which first terminal 110 and second terminal 115 are adapted to be connected to the fixed wireless terminal 100 for e.g. packet transmission. With fixed is also meant that the fixed wireless terminal 100 may be fixed arranged in a train or bus etc, even if the train and buss moves.

The terminals may be any type of terminal such as a laptop, a computer, a mobile phone, a PDA, a fixed phone. The fixed wireless terminal 100 comprises an antenna grid 120 which antenna grid 120 comprises a plurality of antenna elements 125. The first terminal 110 and second terminal 115 are adapted to communicate with the fixed wireless terminal 100. The fixed wireless terminal 100 communicates in turn via its antenna grid 120 with one or more radio base stations in a radio access network such as e.g. WCDMA/ High Speed Packet Access (HSPA), GSM/EDGE, CDMA2000/EvDO, WiMax, LTE (Long Term Evolution).

The radio access network comprises a plurality of potential cells through which packet data tunnels for packet transmission may be established from the fixed wireless terminal 100. In the example of Figure 1, four such potential cells are shown, a first cell 131, a second cell 132, a third cell 133 and a fourth cell 134. Each of the potential cells is served by a respective radio base station. The packet data tunnels are adapted to be established from the fixed wireless terminal 100 and through each of a respective cell in a set of a plurality of cells. The packet transmission may e.g. be a data packet flow such as a TCP (Transmission Control Protocol), UDP (User Data Protocol) or an Internet Protocol (IP) packet flow. The set of cells in the example of Figure 1 is represented by the first cell 131 and the second cell 132. The fixed wireless terminal 100 is adapted to establish a first packet data tunnel 135 for packet transmission to a network controller node 142 through

the first cell 131, i.e. through a first base station 136 serving the first cell 131 and a second packet data tunnel 137 for packet transmission to the network controller node 142 through the second cell 132, i.e. through a second base station 138 serving the second cell 132. The third cell 133 is served by a third base station 139 and the fourth cell 134 is served by a fourth base station 140. In some embodiments the two or more base stations may be represented by one and the same base station serving more than one cell. The first base station 136, the second base station 138, the third base station 139 and the fourth base station 140 are adapted to be controlled by the network controller node 142. The fixed wireless terminal 100, the first base station 136, the second base station 138, the third base station 139, the fourth base station 140 and the network controller node 142 are all network nodes in the radio access network. The local area network 105 may be comprised inside a building 145 and the antenna grid 120 may be arranged on a wall on the building 145 or preferably the outside wall of the building 145, e.g. on a window of the building 145 as depicted in the example in Figure 1.

In some embodiments a first steered beam is adapted to be formed with the antenna grid 120, which first steered beam controls transmission towards the first base station 130. In many radio situations more than one base station is reachable from one location. In dense urban areas with small cells this is often the case. Also, beam forming improves coverage which increases the ability to reach several bases. Therefore, in some embodiments a second steered beam is adapted to be formed with the antenna grid 120, which second steered beam controls transmission towards the second base station 135. More than two beams can also be formed. With enough antenna elements 125 several beams can be formed and are directed towards multiple base stations. The beam patterns are preferably selected with the objective to achieve a high gain in direction to the desired base station and a low gain (high attenuation) in direction of other base stations. For downlink, the multiple elements may be used for interference suppression enabling concurrent reception from the several base stations. This may further be combined with (successive) interference cancellation or joint detection.

The present method comprises different embodiments, and may be implemented in one or a plurality of network nodes. Some embodiments are radio access network unaware embodiments. In this case the present method is implemented in one network node only, such as the fixed wireless terminal, and the radio access network is not aware of it, i.e. no node except the fixed wireless terminal in the radio access network is changed or has knowledge of the solution. Some embodiments are radio access network aware embodiments. In this case the present method is implemented in a plurality of radio access network nodes. A flow of the common concept of the present method will first be described, and then a description of the implementations for the network unaware embodiments and the network aware embodiments will follow.

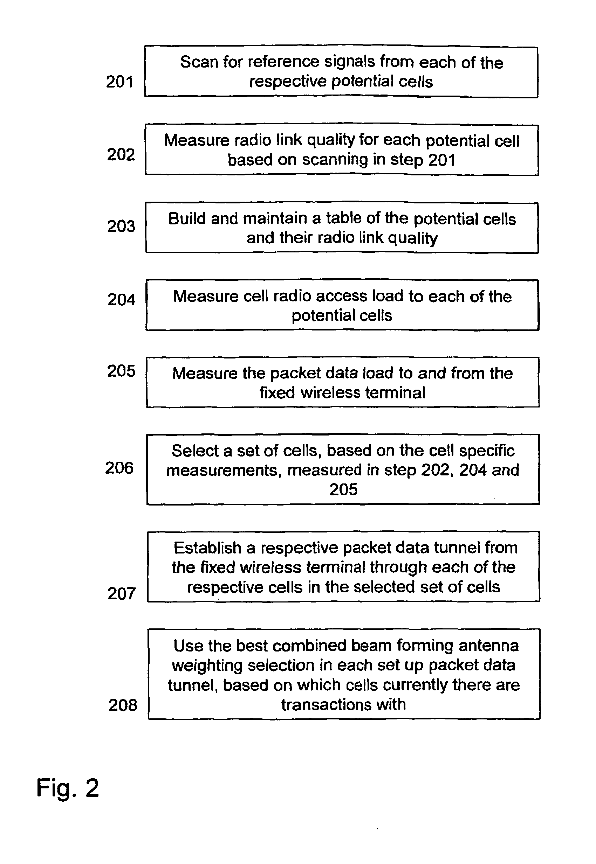

Figure 2 is a flow chart depicting the common concept steps of the present method.
201. This step performs scans to find potential cells. Downlink reference signals such as pilots that are sent out from each of the respective potential cell 131, 132, 133 and 134, may be scanned for to find the potential cells 131, 132, 133 and 134 and to make it possible to later on, estimate radio link quality to each of the respective potential cells 131, 132, 133 and 134. Other examples for radio link quality that may be scanned are gain, signal strength, pilot SIR (Signal to Interference Ratio), pilot SNR (Signal to Noise Ratio), pilot Energy per bit per noise power spectral density (Eb/NO). In some embodiments also antenna weighting (beam-pattern) is scanned to find best configuration to each of the respective potential cells 131, 132, 133 and 134 in this step. This step may be performed by the fixed wireless terminal 100.
202. In this step the radio link quality for each potential cell 131, 132, 133 and 134 is measured based on the scans performed in step 201. This step may be performed by the fixed wireless terminal 100 or each of the radio base stations 136, 138, 139 and 140, serving the respective potential cells 131, 132, 133 and 134.
203. A table of the potential cells 131, 132, 133 and 134, their radio link quality and maybe also the corresponding antenna configuration, may be created and maintained. The table is adapted to be used for selecting the set of cells. In some embodiment this can be done on a slow basis such as for hours up to days but for implementation of the present method in a bus or train, it must be faster such as e.g. seconds or tenths of seconds. This step may be performed by the fixed wireless terminal 100 or the network controller node 142.
204. In some embodiments a cell radio access load to each of the potential cells 131, 132, 133 and 134 is also measured e.g. on a faster basis such as for seconds. This step may be performed by the fixed wireless terminal 100 or each of the radio base stations serving the respective potential cells 131, 132, 133 and 134.
205. In some embodiments the packet data load between the fixed wireless terminal (100) and each of the respectively base station 136, 138, 139 and 140 serving the respective potential cells 131, 132, 133 and 134, is measured. This measurement is 0 at first packet data tunnel established, and then increases for each packet data tunnel being established, and is then available for any coming packet data tunnel selection. This step may be performed by the fixed wireless terminal 100 or the network controller node 142.
206. A set of cells 131, 132 that are the most suitable cells to use for a packet transmission is selected based on the cell specific measure on radio link quality, measured in step 202. In some embodiments the selection is also based on cell load, measured in 204 and in some embodiments also on fixed wireless terminal 100 packet data load to and from the respective potential cell 131, 132, 133 and 134 measured in step 205. In this example a set of cells comprising two cells 131 and 132 are selected, but more than two cells may also be selected. This means that the potential cells 131, 132, 133 and 134 are ranked based on the measurements and if a set of cells comprising two cells are selected, the best and second best cells of the ranked cells are comprised in the selected set of cells. In the example in Figure 1, the first cell 131 and the second cell 132 are the best cells and are comprised in the selected set of cells. If a set of cells comprising three cells are selected, the best, second best and third best cells of the ranked cells are comprised in the selected set of cells and so on. This step may be performed by the fixed wireless terminal 100 or the network controller node 142.
207. A respective individual packet data tunnel 135, 137 is established from the fixed wireless terminal 100 and through each of the respective cells 131, 132 comprised in the selected set of cells to the network controller node 142, i.e. through each of the base stations 136, 138, serving the respective cell 131, 132 comprised in the selected set of cells. This is performed such that a first packet data tunnel 135 is established through the first cell 131, and a second packet data tunnel 137 is established through the second cell 132. In this example two packet data tunnels 135, 137 are established since two cells 131, 132 were selected, but more than two packet data tunnels may be established, if the set of cells comprises more than two cells. This step may be performed by the fixed wireless terminal 100 or the network controller node 142.
208. Associated with each established packet data tunnel 135, 137, a beam forming combination for transmission and antenna weighting selection for reception may be used based on which cells of the set of cells 131, 132 that there currently are transactions with, and based on the table created in step 203. The best usage of the antenna elements may depend on the number of packet data tunnels. The number of packet data tunnels that can be established depends on the number of antenna elements 125 within the fixed wireless terminal 100 and the number of base stations connected. The best weighting for each time instance can differ. This step may be performed by the fixed wireless terminal 100 or the base stations 136 and 138 serving the respective selected cells 131, 132.

The first terminal 110 and/or the second terminal 115 in the local area network may now start to use the established packet data tunnels 135, 137 for packet transmission. One terminal may use one or more of the established packet data tunnels such that the first terminal 110 may use both the first packet data tunnel 135 and the second packet data tunnel 137 at the same time, e.g. if large resources are required such as for download of large files from data bases, internet service providers, file servers, home pages etc. Two or more terminals may also share a packet data tunnel such that e.g. a first packet transmission is transmitted from the first terminal 110 through the first packet data tunnel 135 and a second packet transmission is transmitted from the second terminal 115 through the same first packet data tunnel 135. The fixed wireless terminal 100 manages the allocation of the established first and second packet data tunnel 135, 137 based on the packet data requirements of the respective terminals within the local area network such as the first terminal 110 and second terminal 115 depicted in Figure 1.

The fixed wireless terminal 100 may also control the load sharing of uplink load on packet data tunnels. For downlink, the load sharing control may be performed both on the radio access network side in the network controller node 142 and in the fixed wireless terminal 100 by directing downlink packet transmission requests. The load sharing is based on radio quality and load per cell.

Some embodiments that are radio access network unaware will now be described. In these embodiments all steps are performed within the fixed wireless terminal 100. To be able to establish more packet data tunnels, one "terminal registration" is required for each packet data tunnel. The fixed wireless terminal 100 may therefore comprise one smart card or similar per packet data tunnel 135, 137. The smart card or similar is adapted for terminal registration and authentication in the network such as e.g. a subscriber identity module (SIM)-card. This is required since the radio access network is not prepared to handle the authentication and "terminal registration" more than once per SIM-card that is required for each packet data tunnel. The radio access network sees each packet data tunnel connection as an individual terminal.

In some of the network unaware embodiments the fixed wireless terminal 100 will assign a port number associated with each packet data flow with an IP-address achieved from the network, similar to Asymmetric Digital Subscriber Line (ADSL) terminals. The radio access network may from an IP-addressing view see one IP-address per established packet data tunnel and one port number per packet flow.

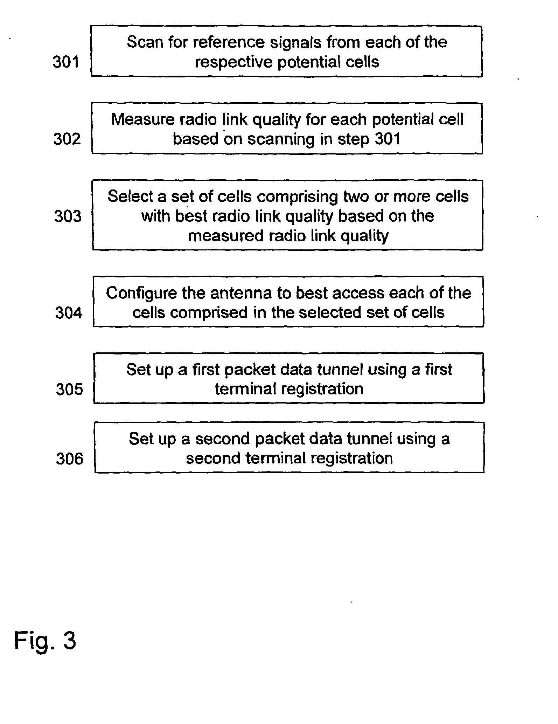

Load sharing between packet data tunnels may be performed per packet data flow i.e. per group of packets given the same address (port number) by the first and/or second terminal 110 and/or 115, from the simplest allocating equal number of packet flows per packet data tunnel 135, 137 to more advanced based on radio quality, load per cell and IP-flow classification. The flow chart of Figure 3 depicts the method steps of these embodiments, which steps are performed by the fixed wireless terminal 100.
301. To later on be able to estimate radio link quality to each of the respective potential cells 131, 132, 133 and 134, downlink reference signals such as pilots that are sent out from each of the respective potential cells 131, 132, 133 and 134 may be scanned. This step is performed similar to the way as described under step 201.
302. The radio link quality such as e.g. the pilot SNR, for each of the respective potential cells 131, 132, 133 and 134 is measured based on the scanning in step 301. SNR is the signal to noise ratio. This step is performed similar to the way as described under step 202. A table may be created also in these embodiments to be used for selection of the set of cells, as described in step 203.
303. A set of cells, comprising two or more cells with best radio link quality, is selected based on the measured radio link quality. In this example the selected set of cells comprises the first cell 131 and the second cell 132. The number of cells to be comprised in the selected set of cells may be limited by the configuration of the antenna 120 of the fixed wireless terminal 100 and a lower radio link quality threshold such as an SNR threshold. This step is performed similar to the way as described under step 206.
304. The antenna 120 may be configured to best access each of the cells comprised in the selected set of cells simultaneously transmitted to. A beam forming combination for transmission and antenna weighting selection for reception may be used.
305. The cells 131, 132 of the selected set of cells are ranked, based on the performed measures. A first cell 131 is selected based on the ranking. This may preferably be the best cell. A first packet data tunnel 135 for packet transmission is established from the fixed wireless terminal through the first cell 131 to the network controlling node 142, using a first terminal registration by means of e.g. a first smart card.
306. A second cell 132 is selected based on the ranking. This may preferably be the second best cell. A second packet data tunnel 137 for packet transmission is established from the fixed wireless terminal through the second cell 132 to the network controlling node 142, using a second terminal registration by means of e.g. a second smart card. And so on for further packet data tunnels through further cells in the selected set of cells.

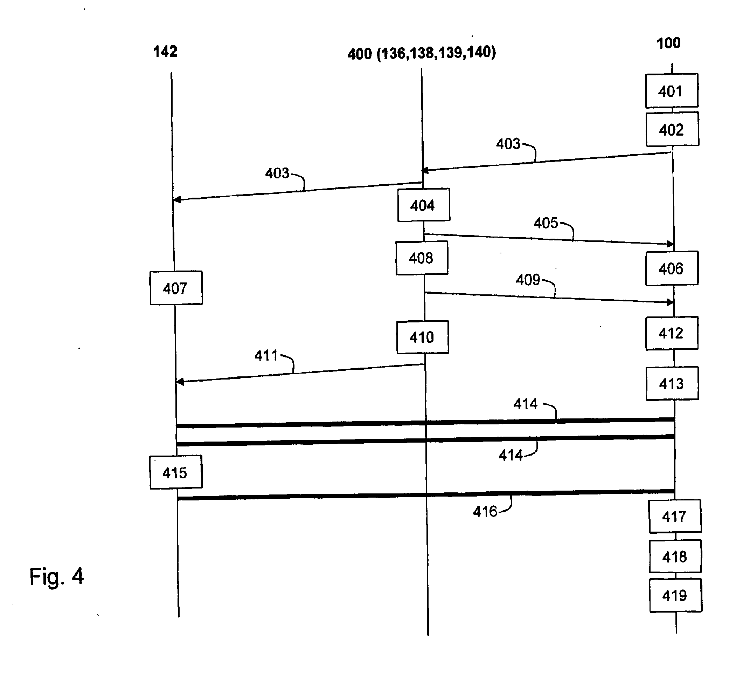

Some example of embodiments that are network aware will now be described, referring to the schematic combined flowchart and signalling scheme in Figure 4. In these embodiments the steps are performed by different radio access network nodes such as the fixed wireless terminal 100, a radio base station 400 serving the respective potential cells (in this example, comprising among other base stations also the first base station 136, the second base station 138, the third base station 139 and the fourth base station 140) and the network controller node 142. The radio access network is aware of all connections. A refined load sharing may be performed since it can be controlled per data packet such as e.g. per IP packet, in the network controller node 142 for downlink and in the fixed wireless terminal for uplink.
401. The fixed wireless terminal 100 may scan downlink for reference signals such as pilots and for potential cells 131, 132, 133 and 134 to connect to. Antenna weighting such as beam-pattern, may also be scanned to find best configuration of the antenna 120 in the fixed wireless terminal 100, to each respective potential cell 131, 132, 133 and 134. This step is performed by the fixed wireless terminal 100.
402. The downlink radio link quality for each respective potential cell 131, 132, 133 and 134 is measured based on the scanning performed in step 401. This step is performed by the fixed wireless terminal 100.
403. The fixed wireless terminal 100 reports the downlink radio link quality for each respective potential cell 131, 132, 133 and 134 measured in step 402, to the network controller node 142. This may be performed via one of the radio base stations 400.
404. Each of the radio base stations 400, serving the respective potential cells 131, 132, 133 and 134, measures the uplink radio link quality to the fixed wireless terminal 100.
405. Each of the radio base stations 400, serving the respective potential cells 131, 132, 133 and 134, reports the uplink radio link quality measured performed in step 404, to the fixed wireless terminal 100.
406. A table of potential uplink cells 131, 132, 133 and 134, their radio link quality reported in step 405, and maybe also the corresponding antenna configuration scanned in step 401 may be created and maintained on a slow basis such as for hours up to days, faster if used in a train or a bus. This step may be performed by the fixed wireless terminal 100.
407. A table of potential downlink cells 131, 132, 133 and 134, and their downlink radio link quality reported to the network controller node 142 in step 403, may be created and maintained on a slow basis such as for hours up to days but faster if the present method is implemented in a train or a bus. This step is performed by the network controller node 142.
408. Each of the radio base stations 400, serving the respective potential cells 131, 132, 133 and 134, may measure the uplink cell load.
409. Each of the radio base stations 400, serving the respective potential cells 131, 132, 133 and 134, may report, e.g. by broadcasting the uplink cell load measured in step 408 to the fixed wireless terminal 100.
410. Each of the radio base stations 400, serving the respective potential cells 131, 132, 133 and 134, may measure the downlink cell load.
411. Each of the radio base stations 400, serving the respective potential cells 131, 132, 133 and 134, may report the downlink cell load measured in step 410 to the network controller node 142.
412. The uplink packet data load for each of the respective potential cells 131, 132, 133 and 134 may be measured by the fixed wireless terminal 100.
413. In the fixed wireless terminal 100, the set of cells to use for uplink packet transmission is selected based on the cell specific measures on uplink radio link quality reported to the fixed wireless terminal 100 in step 405, and where appropriate also uplink cell load reported to the fixed wireless terminal 100 in step 409 and/or packet data load per cell measured in step 412. In the example of Figure 4, the selected set of cells for uplink packet transmission comprises the first cell 131 and the second cell 132.
414. Packet data tunnels 135 and 137 are then established from the fixed wireless terminal 100 through each respective cell 131, 132 of the selected set of cells, to the network controller node 142, to use for uplink packet transmission. This means that at least two packet data tunnels 135, 137 are established, since the set of cells comprises at least two cells.
415. The network controller node 142 selects the set of cells to use for downlink packet transmission based on the cell specific measures on downlink radio link quality reported to the network controller node 142 in step 403 and where appropriate also on cell load reported to the network controller node 142 in step 411. The selected set of cells may be the same as selected for uplink packet transmission in step 413 or a set of cells comprising other cells those selected for uplink packet transmission in step 413. In the example of figure 4 the selected set of cells to use for downlink transmission comprises one cell that is not comprised in the set of cells selected for uplink packet transmission in step 413, e.g., the selected set of cells to use for downlink packet transmission may comprise the third cell 133 and the first cell 131.
416. Packet data tunnels are established from the network controller node 142 through each cell of the selected set of cells to the fixed wireless terminal 142, to use for downlink packet transmission, which was not already connected to use for uplink packet in 414. In the example of Figure 4, the selected set of cells to use for downlink packet transmission comprises the third cell 133 and the first cell 131, i.e. one further cell that is not comprised in the selected set of cells to use for uplink packet transmission, so in this example one more packet data tunnel is established through the third cell 133. (This tunnel is not shown in Figure 1.)
417. The established tunnels may now be used for packet transmission. This may e.g. be performed as follows. The network controller node 142 has selected the set of cells and data tunnels to use for downlink packet transmission are established packet step 415 and 416. When a first packet for downlink packet transmission Is to be sent, the best cell comprised in the set of cells for downlink packet transmission is selected and the packet is sent through the packet data tunnel established to the best cell, in this example the first cell 131, of the selected set of cells 131, 133. When a second downlink packet is to be sent in the same time instance or slot as the first packet, it is sent through the packet data tunnel connected through the second best cell comprised in the set of cells for downlink packet in this example the third cell 133 of the selected set of cells. And so on for further packet data tunnels to further cells in the selected set of cells for downlink packet transmissions. The fixed wireless terminal 100 has selected and connected packet data tunnels through the set of cells 131 and 132 to use for uplink packet transmission in step 413. When a first packet in uplink is to be sent, the packet data tunnel through the best cell comprised in the set of cells for uplink packet transmission is used, in this example the second cell 132, of the selected set of cells. When a second packet is to be sent in the same time instant (slot) as the first packet uplink, the packet data tunnel through the second best cell comprised in the set of cells for uplink packet transmission is used, in this example the first cell 131 of the selected set of cells. And so on for further connections to further cells in the selected set of cells for uplink packet transmissions.
418. For each uplink time instance or transmission slot, the best antenna beam forming may be selected, reaching the respective cell 131, 132 of the selected set of uplink cells, based on the antenna scanning performed in step 401. This step is performed by the fixed wireless terminal 100.
419. For each downlink transmission reception slot, the best antenna weighting and combining receiving from the selected cells simultaneously may be selected. After a reception of a slot, the antenna combining can be processed to find the best combining. The best combining differs depending on which base stations that have been transmitting anything for the slot received. This step is performed by the fixed wireless terminal 100.

Other network architectures may further allow for different multi-antenna solutions such as Multiple-input multiple-output (MIMO).

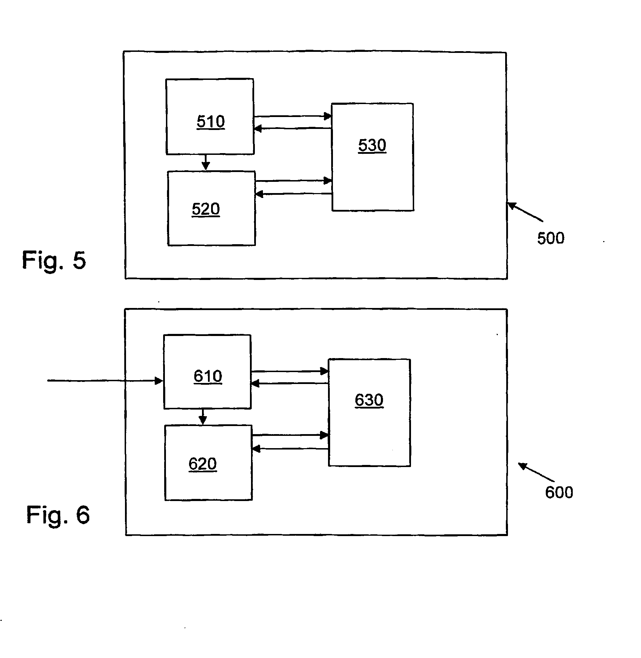

To perform the method steps for establishing at least two packet data tunnels 135,137 for packet transmission, the fixed wireless terminal 100 comprises an arrangement 500 depicted in Figure 5.

The fixed wireless terminal arrangement 500 comprises a selection unit 510 adapted to select a set of cells based on radio link quality between the fixed wireless terminal 100 and each of the respective potential cells 131, 132, 133 and 134 which set of cells comprises at least two cells 131, 132 and which two cells 131, 132 are part of the potential cells 131, 132, 133 and 134.

The fixed wireless terminal arrangement 500 further comprises a tunnel establishing unit 520 adapted to establish the at least two packet data tunnels 135,137 for packet transmission, from the fixed wireless terminal 100 through the selected set of cells 131, 132 to a network controller node 142, one individual packet data tunnel from the fixed wireless terminal 100 through each of the respective cells in the selected set of cells 131, 132.

To perform the method steps for establishing at least two packet data tunnels 135, 137 for packet transmission, the network controller node 142 comprises an arrangement 600 depicted in Figure 6.

The network controller node arrangement 600 comprises a receiver 610 adapted to receive radio link quality measurement from one or more base stations 400 serving the respective plurality of potential cells 131, 132, 133, 134.

The network controller node arrangement 600 further comprises a selection unit 620 adapted to select a set of cells based on the received radio link quality between the fixed wireless terminal (100) and each of the respective potential cells (131, 132, 133 and 134) which set of cells (131, 132) comprises at least two cells (131, 132), which two cells (131, 132) are part of the potential cells (131, 132, 133, 134). The set of cells are adapted to be used for to establishing the at least two packet data tunnels (135,137) for packet transmission.

The present mechanism for establishing at least two packet data tunnels 135,137 for packet transmission may be implemented through one or more processors, such as the processor 530 in the fixed wireless terminal arrangement 500 depicted in Figure 5 and/or the processor 630 in the network controller node arrangement 600 depicted in Figure 6, together with computer program code for performing the functions of the invention. The program code mentioned above may also be provided as a computer program product, for instance in the form of a data carrier carrying computer program code for performing the present method when being loaded into the fixed wireless terminal 100 or the network controller node 142. One such carrier may be in the form of a CD ROM disc. It is however feasible with other data carriers such as a memory stick. The computer program code can furthermore be provided as pure program code on a server and downloaded to the fixed wireless terminal 100 or the network controller node 142 remotely.

When using the word "comprise" or "comprising" it shall be interpreted as nonlimiting, i.e. meaning "consist at least of".

The present invention is not limited to the above-describe preferred embodiments. Various alternatives, modifications and equivalents may be used. Therefore, the above embodiments should not be taken as limiting the scope of the invention, which is defined by the appending claims.

## Claims

1. Method in a radio access network node for establishing packet data transmission to and/or from a fixed wireless terminal (100) in a local area network (105), the fixed wireless terminal (100) being a radio access network node comprised in a radio access network comprising cells, which cells include a plurality of cells which are potential cells (131, 132, 133, 134) for packet data transmission to and/or from the fixed wireless terminal, the method **characterized in** comprising the steps of:
*selecting* (206, 303, 413, 415) a set of cells (131, 132) to use for a packet transmission, based on radio link quality between the fixed wireless terminal (100) and each of the respective potential cells (131, 132, 133 and 134), wherein said set of cells are part of the potential cells and comprises at least two cells; and
*establishing* (305, 306, 414, 416) at least two packet data tunnels (135,137), one individual packet data tunnel to and/or from the fixed wireless terminal (100) through each of the respective cells in the selected set of cells (131, 132);
wherein different data is transmitted through the different at least two packet data tunnels.

2. Method according to claim 1, wherein each of the individual packet data tunnels to and/or from the fixed wireless terminal (100) through each of the respective cells in the selected set of cells (131, 132) is established from and/or to a network controller node 142 in the radio access network.

3. Method according to any of the claims 1-2, wherein the radio link quality is obtained by the further steps of:
*scanning* (201, 301, 401) for reference signals sent out from each of the potential cells (131, 132, 133, 134); and
*measuring* (202, 302, 402, 404) the radio link quality based on the scanned reference signals.

4. Method according to any of the claims 1-3, comprising the further step of:
*scanning* (201) antenna weighting for configuration of the antenna to each of the respective potential cells (131, 132, 133 and 134).

5. Method according to any of the claims 1-4, comprising the further step of:
*creating* (203, 406, 407) a table of the potential cells (131, 132, 133 and 134) and their radio link quality, which table is adapted to be used as a base for the step of selecting (206, 303, 413, 415) the set of cells.

6. Method according to claim 5, wherein the created table further is related to the corresponding antenna configuration of the potential cells (131, 132, 133 and 134).

7. Method according to claim 6, comprising the further step of:
*using* (208, 304, 418, 419) a beam forming combination for transmission and antenna weighting selection for reception in each established packet data tunnel (135,137), based on which cells of the set of cells that there currently are transactions with, and based on the created table.

8. Method according to any of the claims 1-7, wherein the step of selecting (206, 303, 413, 415) the set of cells further is based on the step of:
*measuring* (204, 408, 410) a cell radio access load of each of the potential cells (131, 132, 133 and 134).

9. Method according to any of the claims 1-8, wherein the step of selecting the set of cells is based on the step of:
*measuring* (205,) the packet data load from the fixed wireless terminal (100) to each of the respectively base station (136, 138) serving the respective potential cells (131, 132, 133 and 134).

10. Method according to any of the claims 1-9, comprising the further steps of:
*ranking* (305) the cells (131, 132) of the selected set of cells based on the performed measurements, and *selecting* (305) a first cell (131) and a second cell based on the ranking; and
wherein the step of establishing (305, 306, 414, 416) is performed by the step of:
*establishing* a first packet data tunnel (135) through to the first cell (131) of the selected set of cells and a second packet data tunnel (135) through to the second cell (132) of the selected set of cells.

11. Method according to any of the claims 1-10, wherein the radio access network node is represented by the fixed wireless terminal (100) and wherein the method steps are performed in the fixed wireless terminal (100).

12. Method according to claim 10 or 11, wherein one first terminal registration is used for the first packet data tunnel, and a second terminal registration is used for the second packet data tunnel.

13. Method according to any of the claims 1, 5 and 9-10, wherein the radio access network comprises a network controller node (142) adapted for control of the radio access network, said network controller node (142) being a node comprised in the radio access network and wherein the method steps are performed by the network controller node (142).

14. Method according to any of the claims 3 and 8, wherein the radio access network comprises a radio base station (400, 136, 138, 139, 140) adapted to serving a any of the potential cells (131, 132, 133, 134), said radio base station (400, 136, 138, 139, 140) being a node comprised in the radio access network and wherein the method steps are performed by the radio base station (400, 136, 138).

15. Method according to claim 14 when depending on claim 8, wherein the step of measuring (204, 408, 410) a cell radio access load to each of the potential cells (131, 132, 133 and 134) is performed by
*measuring* (408) the uplink cell load and reporting it to the fixed wireless terminal (100); and
*measuring* (410) the downlink cell load and reporting it to the network controller node (140).

16. Arrangement (500) in a fixed wireless terminal (100), which fixed wireless terminal (100) is a radio access network node adapted to be comprised in a radio access network, the radio access network comprising cells (131, 132, 133, 134), which cells include a plurality of cells which are potential cells (131, 132, 133, 134) for packet data transmission from the fixed wireless terminal, the fixed wireless terminal being further adapted to be comprised in a local area network, the fixed wireless terminal arrangement (500) **characterized in** comprising:
a selection unit (510) adapted to select a set of cells based on radio link quality between the fixed wireless terminal (100) and each of the respective potential cells (131, 132, 133 and 134) which set of cells comprises at least two cells (131, 132), which at least two cells (131, 132) are part of the potential cells (131, 132, 133, 134); and
a tunnel establishing unit (520) adapted to establish at least two packet data tunnels (135,137) for packet transmission, from the fixed wireless terminal (100) through the selected set of cells (131, 132) to a network controller node (142), one individual packet data tunnel from the fixed wireless terminal (100) through each of the respective cells in the selected set of cells (131, 132) in a manner so that different data is transmitted through the different packet data tunnels.

17. Arrangement (600) in a network controller node (142), which network controller node (142) is a radio access network node adapted to be comprised in a radio access network comprising cells (131, 132, 133, 134), which cells include a plurality of cells which are potential cells (131, 132, 133, 134) for packet data transmission to and/or from a fixed wireless terminal (100) being comprised in the radio access network and in a local area network, the network controller node arrangement (600) **characterized in** comprising:
a receiver (610) adapted to receive radio link quality measurement from one or more base stations (400) serving the respective potential cells (131, 132, 133, 134);
a selection unit (620) adapted to select a set of cells based on the received radio link quality between the fixed wireless terminal (100) and each of the respective potential cells (131, 132, 133 and 134), which set of cells (131, 132) comprises at least two cells (131, 132), which at least two cells (131, 132) are part of the potential cells (131, 132, 133, 134); and
a tunnel establishing unit adapted to establish at least two packet data tunnels (135,137) for packet transmission, from the network controller node (142) through the selected set of cells (131, 132) to the fixed wireless terminal (100), in a manner so that one individual packet data tunnel is established from the network control node through each of the respective cells in the selected set of cells (131, 132) and so that different data is transmitted through the different packet data tunnels.

## Patentansprüche

1. Verfahren in einem Funkzugangsnetzwerkknoten zum Einrichten von Paketdatenübertragung zu und/oder von einem festen drahtlosen Endgerät (100) in einem lokalen Netzwerk (105), wobei das feste drahtlose Endgerät (100) ein Funkzugangsnetzwerkknoten ist, enthalten in einem Funkzugangsnetzwerk, das Zellen umfasst, wobei die Zellen eine Vielzahl von Zellen enthalten, die potenzielle Zellen (131, 132, 133, 134) für Paketdatenübertragung zu und/oder von dem festen drahtlosen Endgerät sind, das Verfahren **dadurch gekennzeichnet, dass** es die folgenden Schritte umfasst:
*Auswählen* (206, 303, 413, 415) eines Satzes von Zellen (131, 132) zur Verwendung für eine Paketübertragung basierend auf der Funkverbindungsqualität zwischen dem festen drahtlosen Endgerät (100) und jeder der jeweiligen potenziellen Zellen (131, 132, 133 und 134), wobei der Satz von Zellen Teil der potenziellen Zellen ist und mindestens zwei Zellen umfasst; und
*Einrichten* (305, 306, 414, 416) von mindestens zwei Paketdatentunneln (135, 137), ein individueller Paketdatentunnel zu und/oder von dem festen drahtlosen Endgerät (100) durch jede der jeweiligen Zellen in dem ausgewählten Satz von Zellen (131, 132);
wobei verschiedene Daten durch die mindestens zwei verschiedenen Paketdatentunnel übertragen werden.

2. Verfahren nach Anspruch 1, wobei jeder der individuellen Paketdatentunnel zu und/oder von dem festen drahtlosen Endgerät (100) durch jede der jeweiligen Zellen in dem ausgewählten Satz von Zellen (131, 132) von und/oder zu einem Netzwerksteuerungsknoten 142 in dem Funkzugangsnetzwerk eingerichtet wird.

3. Verfahren nach einem der Ansprüche 1-2, wobei die Funkverbindungsqualität durch die folgenden weiteren Schritte erhalten wird:
*Abtasten* (201, 301, 401) auf Referenzsignale, ausgesandt von jeder der potenziellen Zellen (131, 132, 133, 134); und
*Messen* (202, 302, 402, 404) der Funkverbindungsqualität basierend auf den abgetasteten Referenzsignalen.

4. Verfahren nach einem der Ansprüche 1-3, umfassend den folgenden weiteren Schritt:
*Abtasten* (201) von Antennengewichtung zur Konfiguration der Antenne zu jeder der jeweiligen potenziellen Zellen (131, 132, 133 und 134).

5. Verfahren nach einem der Ansprüche 1-4, umfassend den folgenden weiteren Schritt:
*Erzeugen* (203, 406, 407) einer Tabelle der potenziellen Zellen (131, 132, 133 und 134) und ihrer Funkverbindungsqualität, wobei die Tabelle dafür ausgelegt ist, als eine Grundlage für den Schritt des Auswählens (206, 303, 413, 415) des Satzes von Zellen verwendet zu werden.

6. Verfahren nach Anspruch 5, wobei die erzeugte Tabelle ferner zu der korrespondierenden Antennenkonfiguration der potenziellen Zellen (131, 132, 133 und 134) in Beziehung steht.

7. Verfahren nach Anspruch 6, umfassend den folgenden weiteren Schritt:
*Verwenden* (208, 304, 418, 419) einer Strahlformungskombination für Übertragung und Antennengewichtungsauswahl für Empfang in jedem eingerichteten Paketdatentunnel (135, 137) basierend auf den Zellen des Satzes von Zellen, mit denen gegenwärtig Transaktionen bestehen, und basierend auf der erzeugten Tabelle.

8. Verfahren nach einem der Ansprüche 1-7, wobei der Schritt des Auswählens (206, 303, 413, 415) des Satzes von Zellen ferner auf dem folgenden Schritt basiert:
*Messen* (204, 408, 410) einer Zellfunkzugangslast jeder der potenziellen Zellen (131, 132, 133 und 134).

9. Verfahren nach einem der Ansprüche 1-8, wobei der Schritt des Auswählens des Satzes von Zellen auf dem folgenden Schritt basiert:
*Messen* (205) der Paketdatenlast von dem festen drahtlosen Endgerät (100) zu jeder der jeweiligen Basisstationen (136, 138), die die jeweiligen potenziellen Zellen (131, 132, 133 und 134) versorgen.

10. Verfahren nach einem der Ansprüche 1-9, umfassend die folgenden weiteren Schritte:
*Einteilen* (305) der Zellen (131, 132) des ausgewählten Satzes von Zellen basierend auf den durchgeführten Messungen und *Auswählen* (305) einer ersten Zelle (131) und einer zweiten Zelle basierend auf der Einteilung; und
wobei der Schritt des Einrichtens (305, 306, 414, 416) durch den folgenden Schritt durchgeführt wird:
*Einrichten* eines ersten Paketdatentunnels (135) durchgehend zu der ersten Zelle (131) des ausgewählten Satzes von Zellen und eines zweiten Paketdatentunnels (135) durchgehend zu der zweiten Zelle (132) des ausgewählten Satzes von Zellen.

11. Verfahren nach einem der Ansprüche 1-10, wobei der Funkzugangsnetzwerkknoten durch das feste drahtlose Endgerät (100) repräsentiert wird und wobei die Verfahrensschritte in dem festen drahtlosen Endgerät (100) durchgeführt werden.

12. Verfahren nach Anspruch 10 oder 11, wobei eine erste Endgerätregistration für den ersten Paketdatentunnel verwendet wird und eine zweite Endgerätregistration für den zweiten Paketdatentunnel verwendet wird.

13. Verfahren nach einem der Ansprüche 1, 5 und 9-10, wobei das Funkzugangsnetzwerk einen zur Steuerung des Funkzugangsnetzwerks ausgelegten Netzwerksteuerungsknoten (142) umfasst, wobei der Netzwerksteuerungsknoten (142) ein in dem Funkzugangsnetzwerk enthaltener Knoten ist und wobei die Verfahrensschritte durch den Netzwerksteuerungsknoten (142) durchgeführt werden.

14. Verfahren nach einem der Ansprüche 3 und 8, wobei das Funkzugangsnetzwerk eine zum Versorgen einer beliebigen der potenziellen Zellen (131, 132, 133, 134) ausgelegte Funkbasisstation (400, 136, 138, 139, 140) umfasst, wobei die Funkbasisstation (400, 136, 138, 139, 140) ein in dem Funkzugangsnetzwerk enthaltener Knoten ist und wobei die Verfahrensschritte durch die Funkbasisstation (400, 136, 138) durchgeführt werden.

15. Verfahren nach Anspruch 14, wenn von Anspruch 8 abhängig, wobei der Schritt des Messens (204, 408, 410) einer Zellfunkzugangslast zu jeder der potenziellen Zellen (131, 132, 133 und 134) durchgeführt wird durch
*Messen* (408) der Aufwärtsverbindung-Zellenlast und Berichten dieser an das feste drahtlose Endgerät (100); und
*Messen* (410) der Abwärtsverbindung-Zellenlast und Berichten dieser an den Netzwerksteuerungsknoten (140).

16. Anordnung (500) in einem festen drahtlosen Endgerät (100), wobei das feste drahtlose Endgerät (100) ein Funkzugangsnetzwerkknoten ist, der dafür ausgelegt ist, in einem Funkzugangsnetzwerk enthalten zu sein, wobei das Funkzugangsnetzwerk Zellen (131, 132, 133, 134) umfasst, wobei die Zellen eine Vielzahl von Zellen enthalten, die potenzielle Zellen (131, 132, 133, 134) für Paketdatenübertragung von dem festen drahtlosen Endgerät sind, wobei das feste drahtlose Endgerät ferner dafür ausgelegt ist, in einem lokalen Netzwerk enthalten zu sein, die Anordnung (500) des festen drahtlosen Endgeräts **dadurch gekennzeichnet, dass** es Folgendes umfasst:
eine Auswahleinheit (510), ausgelegt zum Auswählen eines Satzes von Zellen basierend auf der Funkverbindungsqualität zwischen dem festen drahtlosen Endgerät (100) und jeder der jeweiligen potenziellen Zellen (131, 132, 133 und 134), wobei der Satz von Zellen mindestens zwei Zellen (131, 132) umfasst, wobei die mindestens zwei Zellen (131, 132) Teil der potenziellen Zellen (131, 132, 133, 134) sind; und
eine Tunneleinrichtungseinheit (520), ausgelegt zum Einrichten von mindestens zwei Paketdatentunneln (135, 137) für Paketübertragung von dem festen drahtlosen Endgerät (100) durch den ausgewählten Satz von Zellen (131, 132) zu einem Netzwerksteuerungsknoten (142), einem individuellen Paketdatentunnel von dem festen drahtlosen Endgerät (100) durch jede der jeweiligen Zellen in dem ausgewählten Satz von Zellen (131, 132) in einer Weise, dass verschiedene Daten durch die verschiedenen Paketdatentunnel übertragen werden.

17. Anordnung (600) in einem Netzwerksteuerungsknoten (142), wobei der Netzwerksteuerungsknoten (142) ein Funkzugangsnetzwerkknoten ist, der dafür ausgelegt ist, in einem Funkzugangsnetzwerk enthalten zu sein, umfassend Zellen (131, 132, 133, 134), wobei die Zellen eine Vielzahl von Zellen enthalten, die potenzielle Zellen (131, 132, 133, 134) für Paketdatenübertragung zu und/oder von einem festen drahtlosen Endgerät (100) sind, der in dem Funkzugangsnetzwerk und in einem lokalen Netzwerk enthalten ist, die Netzwerksteuerungsknoten-Anordnung (600) **dadurch gekennzeichnet, dass** sie Folgendes umfasst:
einen Empfänger (610), ausgelegt zum Empfangen einer Funkverbindungsqualität-Messung von einer oder mehreren Basisstationen (400), die die jeweiligen potenziellen Zellen (131, 132, 133, 134) versorgen;
eine Auswahleinheit (620), ausgelegt zum Auswählen eines Satzes von Zellen basierend auf der empfangenen Funkverbindungsqualität zwischen dem festen drahtlosen Endgerät (100) und jeder der jeweiligen potenziellen Zellen (131, 132, 133 und 134), wobei der Satz von Zellen (131, 132) mindestens zwei Zellen (131, 132) umfasst, wobei die mindestens zwei Zellen (131, 132) Teil der potenziellen Zellen (131, 132, 133, 134) sind; und
eine Tunneleinrichtungseinheit, ausgelegt zum Einrichten von mindestens zwei Paketdatentunneln (135, 137) für Paketübertragung von dem Netzwerksteuerungsknoten (142) durch den ausgewählten Satz von Zellen (131, 132) zu dem festen drahtlosen Endgerät (100) in einer Weise, dass ein individueller Paketdatentunnel von dem Netzwerksteuerungsknoten durch jede der jeweiligen Zellen in dem ausgewählten Satz von Zellen (131, 132) eingerichtet wird und dass verschiedene Daten durch die verschiedenen Paketdatentunnel übertragen werden.

## Revendications

1. Procédé, mis en oeuvre dans un noeud de réseau d'accès radio, destiné à établir une transmission de données en paquets vers et/ou depuis un terminal sans fil fixe (100) dans un réseau local (105), le terminal sans fil fixe (100) étant un noeud de réseau d'accès radio inclus dans un réseau d'accès radio comprenant des cellules, lesquelles cellules incluent une pluralité de cellules qui représentent des cellules potentielles (131, 132, 133, 134) en vue d'une transmission de données en paquets vers et/ou depuis le terminal sans fil fixe, le procédé étant **caractérisé en ce qu'**il comprend les étapes ci-dessous consistant à :
*sélectionner* (206, 303, 413, 415) un ensemble de cellules (131, 132) à utiliser en vue d'une transmission de paquets, sur la base de la qualité de liaison radio entre le terminal sans fil fixe (100) et chacune des cellules potentielles respectives (131, 132, 133 et 134), dans lequel ledit ensemble de cellules fait partie des cellules potentielles et comporte au moins deux cellules ; et
*établir* (305, 306, 414, 416) au moins deux tunnels de données en paquets (135, 137), à savoir un tunnel de données en paquets individuel vers et/ou depuis le terminal sans fil fixe (100) à travers chacune des cellules respectives dans l'ensemble de cellules sélectionné (131, 132) ;
dans lequel différentes données sont transmises à travers lesdits au moins deux différents tunnels de données en paquets.

2. Procédé selon la revendication 1, dans lequel chacun des tunnels de données en paquets individuels vers et/ou depuis le terminal sans fil fixe (100) à travers chacune des cellules respectives dans l'ensemble de cellules sélectionné (131, 132) est établi à partir d'un et/ou vers un noeud de contrôleur de réseau 142 dans le réseau d'accès radio.

3. Procédé selon l'une quelconque des revendications 1 à 2, dans lequel la qualité de liaison radio est obtenue par les étapes supplémentaires ci-dessous consistant à :
*balayer* (201, 301, 401) des signaux de référence envoyés à partir de chacune des cellules potentielles (131, 132, 133, 134) ; et
*mesurer* (202, 302, 402, 404) la qualité de liaison radio sur la base des signaux de référence balayés.

4. Procédé selon l'une quelconque des revendications 1 à 3, comprenant l'étape supplémentaire ci-dessous consistant à :
*balayer* (201) une pondération d'antenne pour la configuration de l'antenne sur chacune des cellules potentielles respectives (131, 132, 133 et 134).

5. Procédé selon l'une quelconque des revendications 1 à 4, comprenant l'étape supplémentaire ci-dessous consistant à :
*créer* (203, 406, 407) une table des cellules potentielles (131, 132, 133 et 134) et de leur qualité de liaison radio, laquelle table est apte à être utilisée en tant que base pour l'étape de sélection (206, 303, 413, 415) de l'ensemble de cellules.

6. Procédé selon la revendication 5, dans lequel la table créée est en outre connexe à la configuration d'antenne correspondante des cellules potentielles (131, 132, 133 et 134).

7. Procédé selon la revendication 6, comprenant l'étape supplémentaire ci-dessous consistant à :
*utiliser* (208, 304, 418, 419) une combinaison de conformation de faisceau pour la transmission et une sélection de pondération d'antenne pour la réception dans chaque tunnel de données en paquets établi (135, 137), sur la base des cellules de l'ensemble de cellules avec lesquelles il existe des transactions en cours, et sur la base de la table créée.

8. Procédé selon l'une quelconque des revendications 1 à 7, dans lequel l'étape de sélection (206, 303, 413, 415) de l'ensemble de cellules est en outre basée sur l'étape ci-dessous consistant à :
*mesurer* (204, 408, 410) une charge d'accès radio de cellule de chacune des cellules potentielles (131, 132, 133 et 134).

9. Procédé selon l'une quelconque des revendications 1 à 8, dans lequel l'étape de sélection de l'ensemble de cellules est basée sur l'étape ci-dessous consistant à :
*mesurer* (205) la charge de données en paquets, du terminal sans fil fixe (100) à chaque station de base (136, 138) respective desservant respectivement les cellules potentielles respectives (131, 132, 133 et 134).

10. Procédé selon l'une quelconque des revendications 1 à 9, comprenant les étapes supplémentaires ci-dessous consistant à :
*classer* (305) les cellules (131, 132) de l'ensemble de cellules sélectionné sur la base des mesures mises en oeuvre, et *sélectionner* (305) une première cellule (131) et une seconde cellule sur la base du classement ; et
dans lequel l'étape d'établissement (305, 306, 414, 416) est mise en oeuvre par l'étape ci-dessous consistant à :
*établir* un premier tunnel de données en paquets (135) allant jusqu'à la première cellule (131) de l'ensemble de cellules sélectionné, et un second tunnel de données en paquets (135) allant jusqu'à la seconde cellule (132) de l'ensemble de cellules sélectionné.

11. Procédé selon l'une quelconque des revendications 1 à 10, dans lequel le noeud de réseau d'accès radio est représenté par le terminal sans fil fixe (100), et dans lequel les étapes du procédé sont mises en oeuvre dans le terminal sans fil fixe (100).

12. Procédé selon la revendication 10 ou 11, dans lequel un premier enregistrement de terminal est utilisé pour le premier tunnel de données en paquets, et un second enregistrement de terminal est utilisé pour le second tunnel de données en paquets.

13. Procédé selon l'une quelconque des revendications 1, 5 et 9 à 10, dans lequel le réseau d'accès radio comporte un noeud de contrôleur de réseau (142) apte à commander le réseau d'accès radio, ledit noeud de contrôleur de réseau (142) étant un noeud inclus dans le réseau d'accès radio, et dans lequel les étapes du procédé sont mises en oeuvre par le noeud de contrôleur de réseau (142).

14. Procédé selon l'une quelconque des revendications 3 et 8, dans lequel le réseau d'accès radio comporte une station de base radio (400, 136, 138, 139, 140) apte à desservir l'une quelconque des cellules potentielles (131, 132, 133, 134), ladite station de base radio (400, 136, 138, 139, 140) étant un noeud inclus dans le réseau d'accès radio, et dans lequel les étapes du procédé sont mises en oeuvre par la station de base radio (400, 136, 138).

15. Procédé selon la revendication 14, lorsqu'elle dépend de la revendication 8, dans lequel l'étape de mesure (204, 408, 410) d'une charge d'accès radio de cellule sur chacune des cellules potentielles (131, 132, 133 et 134) est mise en oeuvre en :
*mesurant* (408) la charge de cellules en liaison montante et en la signalant au terminal sans fil fixe (100) ; et
*mesurant* (410) la charge de cellules en liaison descendante et en la signalant au noeud de contrôleur de réseau (140).

16. Agencement (500) dans un terminal sans fil fixe (100), lequel terminal sans fil fixe (100) est un noeud de réseau d'accès radio apte à être inclus dans un réseau d'accès radio, le réseau d'accès radio comprenant des cellules (131, 132, 133, 134), lesquelles cellules incluent une pluralité de cellules qui représentent des cellules potentielles (131, 132, 133, 134) en vue d'une transmission de données en paquets à partir du terminal sans fil fixe, le terminal sans fil fixe étant en outre apte à être inclus dans un réseau local, l'agencement (500) de terminal sans fil fixe étant **caractérisé en ce qu'**il comprend :
une unité de sélection (510) apte à sélectionner un ensemble de cellules sur la base de la qualité de liaison radio entre le terminal sans fil fixe (100) et chacune des cellules potentielles respectives (131, 132, 133 et 134), lequel ensemble de cellules comporte au moins deux cellules (131, 132), et lesquelles au moins deux cellules (131, 132) font partie des cellules potentielles (131, 132, 133, 134) ; et
une unité d'établissement de tunnels (520) apte à établir au moins deux tunnels de données en paquets (135, 137) en vue d'une transmission de paquets, du terminal sans fil fixe (100), à travers l'ensemble de cellules sélectionné (131, 132), à un noeud de contrôleur de réseau (142), un tunnel de données en paquets individuel à partir du terminal sans fil fixe (100) à travers chacune des cellules respectives dans l'ensemble de cellules sélectionné (131, 132), d'une manière telle que différentes données sont transmises à travers les différents tunnels de données en paquets.

17. Agencement (600) dans un noeud de contrôleur de réseau (142), lequel noeud de contrôleur de réseau (142) est un noeud de réseau d'accès radio apte à être inclus dans un réseau d'accès radio comprenant des cellules (131, 132, 133, 134), lesquelles cellules incluent une pluralité de cellules qui représentent des cellules potentielles (131, 132, 133, 134) en vue d'une transmission de données en paquets vers et/ou depuis un terminal sans fil fixe (100) inclus dans le réseau d'accès radio, et dans un réseau local, l'agencement de noeud de contrôleur de réseau (600) étant **caractérisé en ce qu'**il comprend :
un récepteur (610) apte à recevoir une mesure de qualité de liaison radio provenant d'une ou plusieurs stations de base (400) desservant les cellules potentielles respectives (131, 132, 133, 134) ;
une unité de sélection (620) apte à sélectionner un ensemble de cellules sur la base de la qualité de liaison radio reçue entre le terminal sans fil fixe (100) et chacune des cellules potentielles respectives (131, 132, 133 et 134), lequel ensemble de cellules (131, 132) comporte au moins deux cellules (131, 132), lesquelles au moins deux cellules (131, 132) font partie des cellules potentielles (131, 132, 133, 134) ; et
une unité d'établissement de tunnels apte à établir au moins deux tunnels de données en paquets (135, 137) en vue d'une transmission de paquets, du noeud de contrôleur de réseau (142), à travers l'ensemble de cellules sélectionné (131, 132), au terminal sans fil fixe (100), d'une manière telle qu'un tunnel de données en paquets individuel est établi à partir du noeud de commande de réseau à travers chacune des cellules respectives dans l'ensemble de cellules sélectionné (131, 132), et de sorte que différentes données sont transmises à travers les différents tunnels de données en paquets.
